# EUROPÄISCHE PATENTSCHRIFT

(11) **EP 1 572 414 B1**
(45) Veröffentlichungstag und Bekanntmachung des Hinweises auf die Patenterteilung: **10.08.2011**
(21) Anmeldenummer: 02745142.6
(22) Anmeldetag: 12.06.2002
(51) Int. Cl.: B23K 26/32, B23K 26/24, B23K 33/00, B29C 65/16

(54) **VERFAHREN ZUM VERSCHWEISSEN**
WELDING METHOD
PROCEDE DE SOUDAGE

(30) Priorität: 29.06.2001 DE 10131430
(43) Veröffentlichungstag der Anmeldung: 14.09.2005
(73) Patentinhaber: ROBERT BOSCH GMBH, 70442 Stuttgart (DE)
(72) Erfinder: WEIBLEN, Kurt, 72555 Metzingen (DE); OHL, Christian, 72762 Reutligen (DE); KOHN, Oliver, 72770 Reutlingen (DE); HAAG, Frieder, 72827 Wannweil (DE); HONER, Michael, 70499 Stuttgart (DE)
(86) Internationale Anmeldenummer: PCT/DE2002/002145
(87) Internationale Veröffentlichungsnummer: WO 2003/004211

(56) Entgegenhaltungen:
- EP-A- 0 997 261
- DE-A- 19 510 493
- US-A- 3 769 117
- US-A- 6 054 072
- US-B1- 6 193 833
- US-B1- 6 194 683

## Beschreibung

### Stand der Technik

Die Erfindung geht aus von einem Verfahren zum Verschweißen nach der Gattung des oberbegriffs des Anspruchs 1. US3769 117 A offenbart ein solches Verfahren Es sind bereits Verfahren zum Verschweißen von Bauteilen bekannt, bei denen die Schweißenergie durch einen Laser zugeführt wird. Dabei sind auch sogenannte Durchstrahl-Schweißverfahren bekannt, bei denen der Laserstrahl durch ein transparentes Bauteil hindurch auf zweites Bauteil gerichtet wird, welches den Laserstrahl absorbiert. Durch die Absorbtion wird dieser Bereich stark erwärmt, bis es zu einem Schmelzen des Materials kommt. Wenn die Schmelze mit dem Material des transparenten Bauteils in Berührung kommt, so wird auch dieses Material geschmolzen, so dass es zu einer Verschweißung der beiden Bauelemente kommt. Um einen Kontakt der Schmelze des absorbierenden Materials mit dem transparenten Materials zu gewährleisten, werden die beiden Bauteile bei der Schweißung zusammen gedrückt. Der Abstand wird durch eine Messung des Schweissweges und eine Regelung der zugeführten Energie eingestellt oder er stellt sich in Abhängigkeit von der dabei verwendeten Kraft nach dem Verschweißen ein.

US 6193833 zeigt ein Verfahren zum Verschweißen eines Endstückes auf einen Tubus. Dabei ist das Endstück vor dem Verschweißen auf den Tubus aufgeschoben. Da das Endstück eine wulstförmige Erhebung hat, sind beide Teile mit Kraft gefügt. Dabei wird der Tubus im aufgeschobenen Zustand im Bereich der Wulst des Endstückes verformt. Der Innendurchmesser des Tubus liegt bereits vor dem Verschweißen sowohl auf der Wulst (entspricht Schmelzbereich) als auch beidseitig neben der Wulst auf den zylindrisch ausgebildeten Außenflächen (entspricht Anschlag) des Endstückes auf. Beim Verschweißen des Tubus mit dem Endstück wird die Wulst aufgeschmolzen. Zusätzlich werden beide Teile durch eine umseitig auf dem Tubus aufgedrückte Walze nachträglich im Bereich der Verschweißung miteinander verpresst.

### Vorteile der Erfindung

Das erfindungsgemäße Verfahren mit den Merkmalen des unabhängigen Patentanspruchs hat demgegenüber den Vorteil, dass der Abstand der beiden Bauelemente während der Schweißung durch die Anschläge vorgegeben ist. Der Abstand der beiden Bauelemente im verschweißten Zustand ist somit nicht von der Kraft abhängig, mit der die beiden Bauteile während der Schweißung zusammengepresst wurden. Wenn im Schmelzbereich die beiden Bauteile einen Winkel zueinander aufweisen, so kann überschüssiges geschmolzenes Material definiert zu einer Seite des Schmelzbereichs geleitet werden. Es wird so die Qualität der Schweißstelle erhöht.

Die Anschläge können wahlweise nur auf einer Seite einer Schweißnaht oder auf beiden Seiten der Schweißnaht ausgebildet sein. Das erfindungsgemäße Verfahren ist besonders geeignet, um Bauteile miteinander zu Verschweißen, die ein Gehäuse, insbesondere ein Gehäuse für ein elektronisches Bauelement bilden.

### Zeichnungen

Ausführungsbeispiele der Erfindung sind in den Zeichnungen dargestellt und in der nachfolgenden Beschreibung näher erläutert. Es zeigen die Figuren 1 und 2 ein erstes Ausführungsbeispiel, die Figuren 3 und 4 ein zweites Ausführungsbeispiel, die Figuren 5 und 6 ein drittes Ausführungsbeispiel und die Figuren 7 und 8 ein viertes Ausführungsbeispiel des erfindungsgemäßen Verfahrens.

### Beschreibung

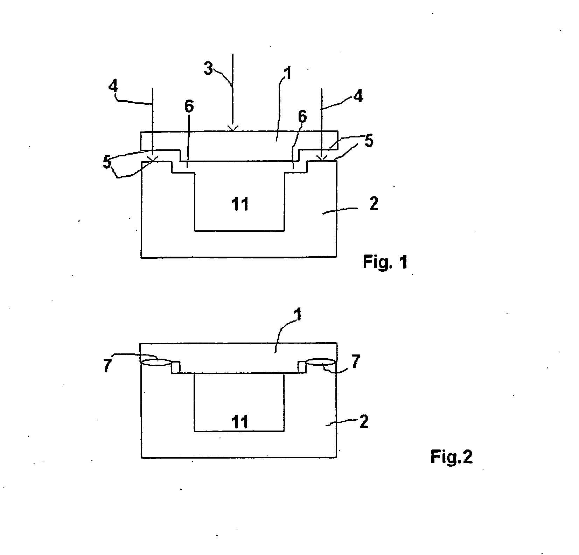

In der Figur 1 wird anhand von Querschnitten durch Bauteile ein erstes Ausführungsbeispiel für das erfindungsgemäße Verfahren zum Verschweißen von Bauteilen gezeigt. In der Figur 1 wird ein Zustand vor dem Verschweißen und in der Figur 2 nach dem Verschweißen gezeigt.

Im Querschnitt der Figur 1 wird ein erstes Bauteil 1 und ein zweites Bauteil 2 gezeigt. Bei dem ersten Bauteil 1 wird inbesondere an einen Gehäusedeckel und bei dem zweiten Bauteil 2 insbesondere an einen Gehäuseboden gedacht. Das erste Bauteil wird wie durch den Kraftpfeil 3 angedeutet wird, gegen das zweite Bauteil 2 gedrückt. Im zusammengedrückten Zustand werden dann Laserstrahlen 4 durch das Bauteil 1 hindurch auf das Bauteil 2 gerichtet. Das Bauteil 1 besteht aus einem Material, welches für die Laserstrahlen transparent ist, d.h. es erfolgt so gut wie keine -oder nur geringe- Absorbtion von Energie aus dem Laserstrahl 4 in dem Material des Bauteils 1. Das Bauteil 2 ist aus einem Material, welches die Laserstrahlung 4 stark absorbiert. Es kommt durch diese Absorbtion zu einer starken Erwärmung, da die Energie des Laserstrahls in einem geringen Volumen des Bauteils 2 absorbiert wird. Die Bauteile 1 und 2 weisen jeweils Schmelzbereiche 5 auf. Bei diesen Schmelzbereichen 5 handelt es sich um die Bereiche, die für die eigentliche Verschweißung aufgeschmolzen werden, d.h. die Bereiche der Bauteile 1 und 2, deren Material durch ein Aufschmelzen miteinander vermischt werden und so die eigentliche Schweißverbindung bilden. Diese Bereiche werden unabhängig ob vor oder nach der eigentlichen Verschweißung als Schmelzbereiche 5 bezeichnet.

Als Materialien für das Bauteil 1 und Bauteil 2 kommen insbesondere Kunststoffe in Frage. Bei derartigen Kunststoffen kann durch entsprechende Zusätze, insbesondere für Laserstrahlen im Infrarotbereich erreicht werden, dass das eine Kunststoffmaterial die Energie des Infrarotlaserstrahls so gut wie nicht absorbiert, während das andere Material die Energie des Infrarotlasers stark absorbiert.

Bei der Einstrahlung der Laserstrahlen in die Schmelzbereiche 5 des stark absorbierenden Bauteils 2 wird eine große Wärmemenge in diese Schmelzbereiche 5 eingebracht. Das Material des unteren Bauteils 2 beginnt daher zu schmelzen. Wenn diese flüssige Schmelze in Kontakt mit dem Schmelzbereich 5 des oberen Bauteils 1 kommt, so wird auch das obere Bauteil 1 in diesem Schmelzbereich 5 aufgeschmolzen. Dies wird dadurch erreicht, dass die Bauteile 1 und 2 während des Verschweißprozesses aufeinander gedrückt werden und so das geschmolzene Material des unteren Bauteils 2 in Kontakt mit dem oberen Bauteil 1 kommt. Eventuell noch bestehende geringe Spalte werden durch Kapillarkräfte überbrückt. Durch das Aufschmelzen der Materialien der Bauteile 1 und 2 in den Schmelzbereichen 5 kommt es zu einer Durchmischung und letztendlich zur Ausbildung der eigentlichen Schweißverbindung. Diese Schweißverbindung 7 wird in der Figur 2 im Querschnitt gezeigt. Durch die so ausgebildeten Schweißverbindungen 7 werden das Bauteil 1 und das Bauteil 2 fest miteinander verbunden. Wenn die Schweißverbindungen 7 als umlaufende Schweißnaht ausgebildet wird, so wird eine hermetisch dichte Verbindung der Bauteile 1 und 2 geschaffen. Insbesondere kann das Bauteil 2, das hier ja als Gehäuseboden ausgebildet ist, eine große Ausnehmung 11 aufweisen, in der vor dem Verschweißen zu verpackende Bauelemente, insbesondere elektronische Schaltkreise, angeordnet werden können.

Wenn die Bauteile 1, 2 bei der Verschweißung mit ausreichend großer Kraft aufeinander gedrückt werden, so wird geschmolzenes Material seitlich aus den Schweißbereichen 5 herausgedrückt. In Abhängigkeit von der Kraft 3 wird somit die geometrische Form der Schweißverbindung 7 und somit auch der Abstand der beiden Bauelemente 1, 2 im verschweißten Zustand zueinander variieren. Erfindungsgemäß wird daher vorgeschlagen, Anschläge 6 vorzusehen, die die Bewegung der beiden Bauelemente 1, 2 während der Verschweißung in Richtung der Kraft 3 begrenzen. In den Figuren 1 und 2 werden die Anschläge 6 durch eine entsprechende stufenförmige Ausgestaltung des ersten Bauteils 1 und des zweiten Bauteils 2 geschaffen, wobei die stufenförmigen Vorsprünge so bemessen sind, dass vor der Verschweißung die Bauteile 1 und 2 zuerst in den Schmelzbereichen 5 aufeinander zu liegen kommen. Wenn dann die Laserenergie in die Schmelzbereiche 5 eingestrahlt wird, so wird ein bisschen des aufgeschmolzenen Materials seitlich verdrängt und die stufenförmigen Anschläge kommen aufeinander zu liegen. Nach dem Abkühlen liegen dann die Bauteile 1 und 2 auf den Anschlägen 6 auf, die neben den Schweißverbindungen 7 liegen. Die Anschläge 6 sind geometrisch neben den Schmelzbereichen 5 angeordnet, um so sicherzustellen, dass es durch die Lasereinstrahlung nicht zu einer Erweichung der Anschläge 6 und somit eventuell zu einer Verformbarkeit dieser Bereiche kommt.

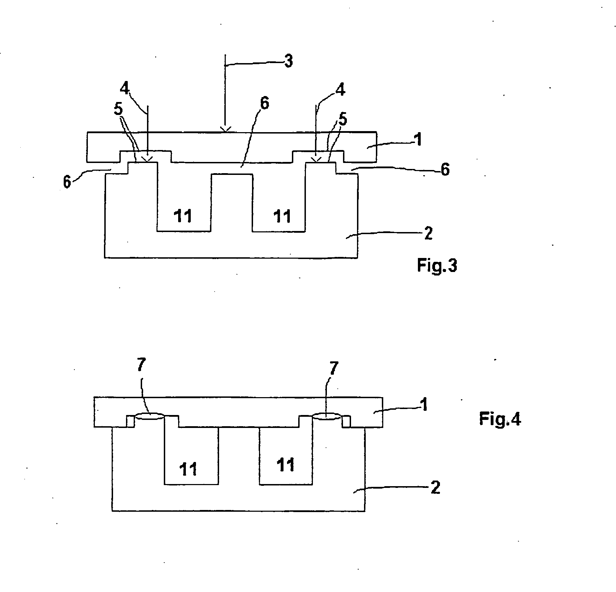

Ein weiteres Ausführungsbeispiel des erfindungsgemäßen Verfahrens wird in den Figuren 3 und 4 erläutert. Mit den Bezugszahlen 1, 2, 3, 4, 5, 7 und 11 werden wieder die gleichen Gegenstände wie in den Figuren 1 und 2 bezeichnet, die auch die gleichen Funktionen wahrnehmen. Im Unterschied zu den Figuren 1 und 2 sind jedoch in den Figuren 3 und 4 eine größe Anzahl von Anschlägen 6 vorgesehen. Insbesondere sind dabei die Anschläge 6 nicht nur auf einer Seite der Schmelzbereiche 5 sondern zu beiden Seiten der Schmelzbereiche 5 angeordnet. Im äußeren Bereich sind Anschläge 6 vorgesehen, die unmittelbar neben den Schweißbereichen 5 angeordnet sind. In einem Mittelbereich der Bauteile 1, 2 ist ein weiterer zentraler Anschlag 6 vorgesehen, der relativ weit von den Schweißbereichen 5 angeordnet ist. Durch diesen zentralen Anschlag 6 wird insbesondere eine Verformung des Bauteils 1 während des Schweißvorganges begrenzt. Dies ist insbesondere dann von Bedeutung, wenn die Bauteile 1 und 2 ein Gehäuse bilden, bei dem die darin eingeschlossenen Hohlräume 11 eine große laterale Ausdehnung aufweisen. In diesem Fall ist das erste Bauelement 1 als Deckel ausgebildet, der ebenfalls eine große laterale Ausdehnung hat. Im Vergleich zur lateralen Ausdehnung ist das Bauteil 1, das den Deckel bildet, in seiner Dicke relativ dünn ausgebildet. Durch das Einleiten der Kraft 3 während des Schweißvorganges kann es daher zu einer Verformung des Bauteils 1, das den Deckel bildet, kommen und das Bauteil 1 würde nach der Schweißung, wenn die Kraft 3 nicht mehr auf.das Bauteil 1 wirkt, wieder seine ursprüngliche Gestalt annehmen wollen. Es würden so mechanische Spannungen in den Bauteilen 1, 2 erzeugt, die die Schweißverbindung 7 belasten. Da durch den Anschlag 6 im Mittelbereich eine Verformung des Bauteils 1 während der Schweißung begrenzt wird, werden durch diese Maßnahme auch mechanische Spannungen im fertiggestellten Gehäuse verringert.

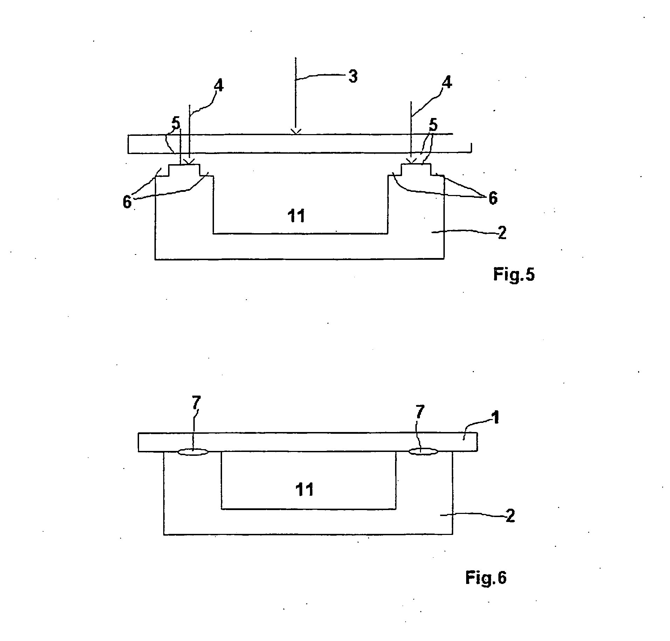

In den Figuren 5 und 6 wird ein weiteres Ausführungsbeispiel des erfindungsgemäßen Verfahrens gezeigt. Mit den Bezugszahlen 1, 2, 3, 4, 7 und 11 werden wieder die gleichen Gegenstände wie in den bisherigen Figuren bezeichnet, die auch dieselben Funktionen wahrnehmen. Ein Unterschied ergibt sich hier jedoch wieder durch die Ausbildung der Schmelzbereiche 5 und der Anschläge 6. Wie in der Figur 5 zu erkennen ist, ist das Bauteil 1 einfach als plattenförmiges Bauelement mit Plattenoberflächen, die keine Strukturierung aufweisen, ausgebildet. Das zweite Bauelement 2 weist einen Schmelzbereich 5 auf, der eine gewisse Erhebung im Vergleich zu Anschlägen, die in unmittelbarer Nähe zu dem Schmelzbereich 5 zu beiden Seiten des Schmelzbereichs 5 angeordnet sind. Die Höhe dieser Erhebung ist in der Figur 5 übertrieben dargestellt und hängt in der Realität im wesentlichen davon ab, bis zu welcher Tiefe die Laserstrahlen 4 das Material des zweiten Bauteils 2 aufschmelzen. In der Figur 6 wird ein Querschnitt durch das fertig verschweißte Bauelement gezeigt, wobei zu erkennen ist, dass das erste Bauteil 1 nun im Wesentlichen flach auf der Ebene aufliegt, die in der Figur 5 durch die Anschläge 6 des Bauteils 2 gebildet wurden. Die Schweißverbindungen 7 erstrecken sich ausgehend von dieser Ebene im geringen Maße in die Bauteile 1 und 2 hinein. Der Vorteil an dem Verfahren nach den Figuren 5 und 6 ist die einfache Ausgestaltung des ersten Bauteils 1, welches insbesondere als einfache Platte ausgebildet sein kann.

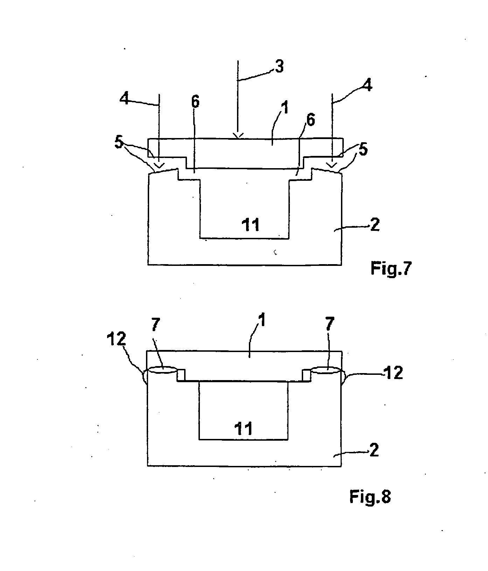

In den Figuren 7 und 8 wird ein weiteres Ausführungsbeispiel des erfindungsgemäßen Verfahrens gezeigt. Mit den Bezugszeichen 1, 2, 3, 4, 5, 6, 7 und 11 werden wieder die gleichen Gegenstände wie in den Figuren 1 und 2 bezeichnet, die auch dieselbe Funktion äusüben. Im Unterschied zur Figur 1 ist jedoch der Schmelzbereich 5 des Bauteils 2 nicht parallel zu dem Schmelzbereich 5 des Bauteils 1 ausgebildet, sondern weist einen Winkel auf. Durch diesen Winkel wird erreicht, dass geschmolzenes Material des unteren Bauteils 2 und des oberen Bauteils 1 durch das Zusammenpressen der Bauteile 1, 2 definiert seitlich nach außen verschoben wird. Dies wird in der Figur 8 durch die Schweißguttropfen 12 verdeutlicht, die während der Schweißung seitlich aus den Schweißverbindungen 7 herausdrückt wurden. Durch die Abschrägung des Schmelzbereichs 7 des Bauteils 2 wurde ein bevorzugter Austritt von überschüssigem geschmolzenem Material seitlich bewirkt.

Es ist natürlich auch möglich, beide Schmelzbereiche 5, d.h. sowohl auf dem Bauteil 1 wie auch auf dem Bauteil 2 abgeschrägt auszubilden, insbesondere so, dass sie keinen rechten Winkel zu der Richtung der Kraft 3 bilden. Der seitliche Austrieb von geschmolzenem Material wird dadurch noch verstärkt. Weiterhin ist diese Form der Ausbildung der Schmelzbereiche 5 technisch auch ohne die Ausbildung von Anschlägen 6 sinnvoll, da durch die abgeschrägten Schmelzbereiche der noch nicht verschweißten Bauteile 1, 2 auf jeden Fall ein seitlicher Austritt von geschmolzenem überschüssigen Material gewährleistet wird. Beide Maßnahmen, d.h. Anschläge 6 und abgeschrägte Ausbildung der Schmelzbereiche 5 tragen aber dazu bei, die Qualität der Verschweißung von Bauteilen 1 und 2 zu verbesseren. Dies ist insbesondere auf dem Gebiet der Verpackung von elektronischen Bauelementen wünschenswert, da dort sehr hohe Anforderungen an die Qualität einer Schweißverbindung für ein Gehäuse für ein elektronisches Bauelement gestellt werden.

## Patentansprüche

1. Verfahren zum Verschweißen eines ersten Bauteils (1) mit einem zweiten Bauteil (2), wobei die Energie zum Schmelzen von Schmelzbereichen (5) des ersten und zweiten Bauteils (1, 2) durch einen Laserstrahl zur Verfügung gestellt wird, wobei das erste Bauteil (1) aus einem Material besteht, welches die Energie des Laserstrahls (4) nur schwach absorbiert und dass zweite Bauteil (2) aus einem Material besteht, welches die Energie des Laserstrahls (4) stark absorbiert, wobei der Laserstrahl (4) durch das erste Bauteil (1) hindurch auf das zweite Bauteil (2) gerichtet wird, wobei die beiden Bauteile (1, 2) ab einem Verschweißen gegeneinander gedrückt werden und wobei außerhalb der Schmelzbereiche (5) mindestens ein Anschlag (6) vorgesehen ist, durch den eine Bewegung der beiden Bauteile (1, 2) aufeinander zu begrenzt wird, **dadurch gekennzeichnet, dass** die Bauteile (1, 2) vor dem Verschweißen zuerst in den Schmelzbereichen (5) aufeinander zu liegen kommen und beim Verschweißen aufgeschmolzenes Material durch das Zusammendrücken der Bauteile (1, 2) seitlich aus der Schweiβbereichen herausgedrückt wird bis beide Bauteile (1, 2) auf dem mindestens einen Anschlag (6) anliegen.

2. Verfahren nach Anspruch 1, **dadurch gekennzeichnet, dass** die Schmelzbereiche (5) derart ausgebildet sind, dass eine nach dem Erkalten gebildete Schweißverbindung (7) als längliche Schweißnaht ausgebildet ist.

3. Verfahren nach Anspruch 2, **dadurch gekennzeichnet, dass** der mindestens eine Anschlag (6) auf einer Seite der Schweißnaht ausgebildet ist.

4. Verfahren nach Anspruch 2, **dadurch gekennzeichnet, dass** auf beiden Seiten der Schweißnaht ein Anschlag (6) vorgesehen ist.

5. Verfahren nach einem der vorhergehenden Ansprüchen, **dadurch gekennzeichnet, dass** die Bauteile (1, 2) in den Schweißbereichen (5) vor dem Verschweißen einen Winkel zueinander bilden, durch den bei der Verschweißung ein bevorzugter Austritt von geschmolzenem Material auf einer Seite der Schweißbereiche (5) bewirkt wird.

6. Verfahren nach einem der vorhergehenden Ansprüche, **dadurch gekennzeichnet, dass** durch das erste und zweite Bauteil (1, 2) im verschweißten Zustand ein Gehäuse, insbesondere ein Gehäuse für ein elektronisches Bauelement, geschaffen wird.

7. Verfahren nach einem der vorhergehenden Ansprüche, **dadurch gekennzeichnet, dass** als Material für die Bauteile (1, 2) ein Kunststoff verwendet wird und dass die unterschiedlichen Absorbtionseigenschaften durch Zusatz weiterer Stoffe zum Kunststoff eingestellt wird.

## Claims

1. Method for welding a first component (1) to a second component (2), the energy for melting melting areas (5) of the first and second components (1, 2) being provided by a laser beam, the first component (1) consisting of a material which only scarcely absorbs the energy of the laser beam (4) and the second component (2) consisting of a material which greatly absorbs the energy of the laser beam (4), the laser beam (4) being directed through the first component (1) onto the second component (2), the two components (1, 2) being pressed against each other from when they fuse and at least one stop (6) being provided outside the melting areas (5), limiting movement of the two components (1, 2) towards each other, **characterized in that**, before fusing, the components (1, 2) first come to lie on each other in the melting areas (5) and material that is melted during the fusing is forced laterally out of the welding areas by the pressing together of the components (1, 2) until the two components (1, 2) lie on the at least one stop (6).

2. Method according to Claim 1, **characterized in that** the melting areas (5) are formed in such a way that a welded connection (7), formed after cooling down, takes the form of an elongated weld seam.

3. Method according to Claim 2, **characterized in that** the at least one stop (6) is formed on one side of the weld seam.

4. Method according to Claim 2, **characterized in that** a stop (6) is provided on both sides of the weld seam.

5. Method according to one of the preceding claims, **characterized in that**, before the fusing, the components (1, 2) form in the welding areas (5) an angle in relation to each other by which a preferred emergence of molten material on one side of the welding areas (5) is brought about during the fusing.

6. Method according to one of the preceding claims, **characterized in that** a housing, in particular a housing for an electronic device, is created by the first and second components (1, 2) in the welded state.

7. Method according to one of the preceding claims, **characterized in that** a plastic is used as the material for the components (1, 2) and **in that** the difference absorption properties are set by adding further materials to the plastic.

## Revendications

1. Procédé de soudage d'un premier composant (1) à un deuxième composant (2), dans lequel l'énergie de fusion de zones de fusion (5) du premier et du deuxième composant (1, 2) est fournie par un faisceau laser, le premier composant (1) étant constitué d'un matériau qui n'absorbe que faiblement l'énergie du faisceau laser (4) et le deuxième composant (2) étant constitué d'un matériau qui absorbe fortement l'énergie du faisceau laser (4), le faisceau laser (4) étant dirigé à travers le premier composant (1) sur le deuxième composant (2), les deux composants (1, 2) étant pressés l'un contre l'autre à partir d'une opération de soudage, et au moins une butée (6) étant prévue en dehors des zones de fusion (5), laquelle limite un mouvement des deux composants (1, 2) l'un vers l'autre, **caractérisé en ce que** les composants (1, 2), avant l'opération de soudage, viennent d'abord s'appliquer l'un contre l'autre dans les zones de fusion (5) et lors de l'opération de soudage, du matériau en fusion est repoussé latéralement hors des zones de soudage par la pression l'un contre l'autre des composants (1, 2), jusqu'à ce que les deux composants (1, 2) s'appliquent sur l'au moins une butée (6).

2. Procédé selon la revendication 1, **caractérisé en ce que** les zones de fusion (5) sont réalisées de telle sorte qu'une liaison par soudage (7) formée après le refroidissement soit réalisée sous forme de joint de soudure allongé.

3. Procédé selon la revendication 2, **caractérisé en ce que** l'au moins une butée (6) est réalisée d'un côté du joint de soudure.

4. Procédé selon la revendication 2, **caractérisé en ce qu'**une butée (6) est prévue des deux côtés du joint de soudure.

5. Procédé selon l'une quelconque des revendications précédentes, **caractérisé en ce que** les composants (1, 2) dans les zones de soudage (5) forment entre eux, avant l'opération de soudage, un angle qui permet, lors de l'opération de soudage, un sortie préférentielle de matériau en fusion d'un côté des zones de soudage (5).

6. Procédé selon l'une quelconque des revendications précédentes, **caractérisé en ce que** le premier et le deuxième composant (1, 2) forment, dans l'état soudé, un boîtier, notamment un boîtier pour un composant électronique.

7. Procédé selon l'une quelconque des revendications précédentes, **caractérisé en ce que** l'on utilise comme matériau pour les composants (1, 2) un plastique, et **en ce que** les différentes propriétés d'absorption sont ajustées en ajoutant au plastique des substances supplémentaires.
